# EUROPÄISCHE PATENTSCHRIFT

(11) **EP 3 132 234 B1**
(45) Veröffentlichungstag und Bekanntmachung des Hinweises auf die Patenterteilung: **21.07.2021**
(21) Anmeldenummer: 15741784.1
(22) Anmeldetag: 24.03.2015
(51) Int. Cl.: G01F 1/58, G01F 15/14

(54) **GEHÄUSE FÜR MAGNETISCH INDUKTIVES DURCHFLUSSMESSGERÄT**
HOUSING FOR A MAGNETIC INDUCTIVE FLOW METER
BOÎTIER POUR APPAREIL DE MESURE DE DÉBIT PAR INDUCTION MAGNÉTIQUE

(30) Priorität: 17.04.2014 DE 102014105569
(43) Veröffentlichungstag der Anmeldung: 22.02.2017
(73) Patentinhaber: Endress+Hauser Flowtec AG, 4153 Reinach (BL) (CH)
(72) Erfinder: SULZER, Thomas, CH-4058 Basel (CH)
(74) Vertreter: Andres, Angelika Maria
(86) Internationale Anmeldenummer: PCT/EP2015/056190
(87) Internationale Veröffentlichungsnummer: WO 2015/158503

(56) Entgegenhaltungen:
- WO-A1-99/36749
- DE-A1- 4 007 225
- JP-A- 2002 043 010
- US-A- 3 470 046

## Beschreibung

Die Erfindung betrifft eine Vorrichtung zur Messung des Durchflusses eines strömenden Fluides durch ein Messrohr nach dem magnetisch induktiven Messprinzip.

Magnetisch induktive Durchflussmessgeräte finden vielfach Anwendung in der Prozess- und Automatisierungstechnik für Fluide ab einer elektrischen Leitfähigkeit von etwa 5µS/cm. Entsprechende Durchflussmessgeräte werden beispielsweise von der Anmelderin in unterschiedlichsten Ausführungsformen für verschiedene Anwendungsbereiche unter der Bezeichnung PROMAG vertrieben.

Das Messprinzip beruht auf dem Faraday'schen Gesetz der magnetischen Induktion und ist aus diversen Veröffentlichungen bekannt. Mittels eines an einem Messrohrteilabschnitt befestigten Magnetsystems wird senkrecht zur Strömungsrichtung des leitfähigen Fluides ein Magnetfeld konstanter Stärke erzeugt. Dadurch werden die im strömenden Fluid vorhandenen Ionen in entgegengesetzte Richtungen abgelenkt. Die durch diese Ladungstrennung entstehende elektrische Spannung wird mittels mindestens zwei an oder in dem Messrohrteilabschnitt befestigten Messelektroden abgegriffen. Die abgegriffene Spannung ist proportional zur Strömungsgeschwindigkeit des Fluides und damit proportional zum Volumendurchfluss.

Entsprechend umfasst ein in Verbindung mit der erfindungsgemäßen Lösung eingesetztes magnetisch induktives Durchflussmessgerät zumindest folgende Komponenten: ein Messrohr, ein Magnetsystem sowie mindestens zwei Messelektroden. Weiterhin wird mindestens eine Elektronikeinheit zur Signalerfassung, -auswertung und/oder -speisung benötigt, und zweckmäßig ebenfalls ein Gehäuse, welches den Messrohrteilabschnitt mit den Messelektroden sowie mindestens einer weiteren Komponente der Vorrichtung, welche auf der dem Fluid abgewandten Seite des Messrohres befestigt ist, gegen die Umgebung begrenzt und schützt. Es versteht sich von selbst, dass mit der weiteren Komponente neben dem Magnetsystem auch jegliche Kabel zur Signalleitung, welche sich in unmittelbarer Umgebung zum Messrohr befinden, gemeint sein können.

Befindet sich die Elektronikeinheit in unmittelbarer Umgebung zum Messrohrteilabschnitt - man spricht hier auch von einer Kompaktbauweise - kann die Elektronikeinheit im gleichen Gehäuse wie der Messrohrteilabschnitt mit den Messelektroden und dem Magnetsystem untergebracht sein. Sonst ist ein separates Gehäuse zu verwenden. Es versteht sich von selbst, dass die Erfindung beide Konfigurationen betrifft.

Das Gehäuse für ein Durchflussmessgerät sollte idealerweise kostengünstig und einfach herzustellen sein. Ferner ist es von Vorteil, wenn empfindliche Kontaktstellen und Kabelanschlüsse innerhalb des Gehäuses lagefixiert werden können, da diese bei fortlaufenden Vibrationen leicht aufbrechen können. Zur Erfüllung dieser Erfordernisse ist die Lösung bekannt geworden, das Gehäuse durch eine direkte Einbettung in Vergussmasse herzustellen, wie es in der Druckschrift EP1522828A1 beschrieben ist.

Allerdings sind bei der direkten Einbettung von jeglichen Gerätekomponenten in Vergussmasse auch viele verfahrensbedingte mögliche Probleme zu beachten. Zum einen ist bei den meisten Vergießmethoden während des Prozesses mit hohen Drücken und/oder Temperaturen zu rechnen. Dies stellt hohe Anforderungen an die jeweilige Gerätekomponente. Aufgrund hoher Temperaturen können beispielsweise Kunststoffteile schmelzen oder Lötstellen verzundern. Hohe Drücke wiederum können zur Folge haben, dass einzelne Komponenten aus ihrer angedachten Position gerissen werden. Darüber hinaus muss die Zusammensetzung der Vergussmasse so gewählt werden, dass eine ausreichende Benetzung auf den jeweiligen Gerätekomponenten gewährleistet ist.

Auf ein magnetisch induktives Durchflussmessgerät übertragen betrifft das beispielsweise die Kontaktierungen der Messelektroden sowie Kabel zur Signalleitung und/oder-versorgung, die die Messelektroden und das Magnetsystem mit einem Anschluss zur Elektronikeinheit verbinden, welcher üblicherweise ins Gehäuse integriert ist. Eine andere betroffene Komponente ist das Magnetsystem selbst, welches üblicherweise ebenfalls aus mehreren Komponenten, zumindest aus mindestens zwei Feldspulen und mindestens zwei Polschuhen, besteht.

Ein weiterer Nachteil der direkten Einbettung in Vergussmasse ist dadurch gegeben, dass vergossene Gerätekomponenten nachträglich nur noch schwer zugänglich sind, da die Vergussmasse alle Gerätekomponenten umschließt und alle zugänglichen Zwischenräume ausfüllt. Im Falle eines magnetisch induktiven Durchflussmessgerätes betrifft dies erneut insbesondere die Messelektroden, das Magnetsystem, sowie jegliche weiteren in unmittelbarer Umgebung des Messrohteilabschnitts befestigten Komponenten, wie die bereits erwähnten Kabel.

Das kann insbesondere bei Defekt einer der vergossenen Komponenten des Durchflussmessgeräts nachteilig sein. Oft macht es dann mehr Sinn, das gesamte Durchflussmessgerät auszutauschen, als eine Reparatur durchzuführen.

Der vorliegenden Erfindung liegt somit die Aufgabe zugrunde, als Gehäuse für ein magnetisch induktives Durchflussmessgerät eine gleichwertige Alternative zur direkten Einbettung in Vergussmasse zu entwickeln, die Zugriff auf die sich im Gehäuse befindlichen Komponenten des Durchflussmessgeräts erlaubt.

Diese Aufgabe wird gelöst durch eine Vorrichtung zur Messung des Durchflusses eines strömenden Fluides durch ein Messrohr nach dem magnetisch induktiven Messprinzip mit folgenden Komponenten:
- einem Magnetsystem zur Erzeugung eines konstanten Magnetfeldes senkrecht zur Strömungsrichtung des Fluides,
- mindestens zwei mit dem Fluid koppelnde an einem Messrohrteilabschnitt befestigte Messelektroden zum Abgreifen der induzierten Spannung,
- mindestens einer Elektronikeinheit zur Signalerfassung, -auswertung und/oder -speisung,
- und einem Gehäuse, wobei das Gehäuse den Messrohrteilabschnitt und mindestens eine weitere daran auf der dem Fluid abgewandten Seite befestige Komponente nach außen gegen die Umgebung begrenzt und schützt, wobei das Gehäuse zumindest teilweise aus einem thermoplastischen Material gefertigt ist, welches den Messrohrteilabschnitt und die mindestens eine weitere daran befestigte Komponente passgenau umhüllt.

Die Aufgabe wird weiterhin gelöst durch ein Verfahren zur Herstellung einer solchen Vorrichtung gemäß Anspruch 8.

Erfindungsgemäß umhüllt das Gehäuse also beispielsweise den Messohrteilabschnitt, die Messelektroden, das Magnetsystem, sowie sonstige Komponenten, die zur Signalerfassung, -leitung, oder-speisung notwendig sind.

Da die Komponenten des Durchflussmessgerätes in unmittelbarer Umgebung zum Messrohr durch das Gehäuse passgenau umhüllt sind, ist auch eine ausreichende Kabelfixierung gewährleistet. Darüber hinaus ist die vorliegende Lösung kostengünstig und einfach umsetzbar. Eine Anpassung an unterschiedliche Dimensionen verschiedener Durchflussmessgeräte ist auf einfache Weise möglich.

Im Gegensatz zur direkten Einbettung in Vergussmasse bringt ein erfindungsgemäßes Gehäuse den Vorteil mit sich, dass in der Regel kein Material zwischen die mindestens eine weitere Komponente des Durchflussmessgeräts und den Messrohrteilabschnitt eindringen kann. Das thermoplastische Material umhüllt die Komponenten des Durchflussmessgeräts lediglich passgenau. Dies wiederum erlaubt bei Auftreten eines Defekts auf einfache Weise Zugang zu den umhüllten Komponenten, da das thermoplastische Material auch einfach wieder entfernt werden kann.

Es ist von Vorteil, wenn die Vorrichtung so ausgestaltet ist, dass das Gehäuse über den Messrohrteilabschnitt und die mindestens eine weitere Komponente der Vorrichtung aufgeschrumpft ist. Diese einfache Art der Anbringung sorgt dafür, dass das Gehäuse den Konturen des Messrohrteilabschnitts und der mindestens einen weiteren Komponente folgt, und diese somit so passgenau wie möglich umgibt.

In einer vorteilhaften Ausgestaltung der Vorrichtung weist das Gehäuse mindestens eine Durchführung mit einem Anschluss für mindestens ein Anschlusskabel oder andere Elektronikkomponenten der Vorrichtung zur Verbindung der sich im Gehäuse befindenden Komponenten mit weiteren Komponenten außerhalb des Gehäuses auf.

Die Durchführung ist dabei vorteilhaft so ausgestaltet, dass sie das Anschlusskabel oder die andere Elektronikkomponente vor Beschädigung schützt. So kann beispielsweise Kabelbruch im Bereich des Anschlusses vermieden werden.

In einer besonders bevorzugten Ausführung besteht das Gehäuse aus einem Schrumpfschlauch. Schrumpfschläuche sind thermoplastische Kunststoffschläuche, die sich unter leichter Wärmeeinwirkung (etwa 50°C) stark zusammenziehen, und so zu einem passgenauen isolierenden und/oder schützenden Überzug werden.

Schrumpfschläuche werden in verschiedenen Ausführungen beispielsweise von der Firma Deifuss-Kabel (http://www.deifuss-kabel.de) vertrieben, bestehen unter anderem aus Polyolefinen, Polyvinylidenfluorid, Polyvinylchlorid oder auch Teflon, und sind in Durchmessern von etwa 1mm bis zu 1.1m und mit Schrumpfverhältnissen von 2:1 bis 10:1 erhältlich. Es gibt Schrumpfschläuche mit verschiedensten Wandstärken, von dünn- bis dickwandig, üblicherweise etwa zwischen 1-65 mm. Dickwandige Schrumpfschläuche finden insbesondere Anwendung bei der Isolierung und dem Schutz von erdvergrabenen Kabeln. Es versteht sich jedoch von selbst, dass man sie auch in anderen Bereichen einsetzen kann.

Auch bei einem Schrumpfschlauch als Gehäuse ist es von Vorteil, wenn der Schrumpfschlauch dickwandig ist, da die Festigkeit und Stabilität einer Schrumpfschlauchumhüllung maßgeblich von seiner Wanddicke abhängt.

Es ist ferner von Vorteil, wenn das thermoplastische Gehäuse aus einem Stück gefertigt ist. Dies kann beispielsweise durch eine spezielle Vorkonfiguration erfolgen. Auf diese Weise kann das Gehäuse besonders einfach über die zu umhüllenden Komponenten aufgebracht werden.

In einer bevorzugten Ausgestaltung weist das Gehäuse die Form eines T-Stücks auf. Auf diese Weise umfasst das Gehäuse bereits eine Durchführung für einen Anschluss für ein Anschlusskabel oder eine andere weitere elektronische Komponente. Es versteht sich jedoch von selbst, dass auch andere Formen denkbar sind. Insbesondere sind auch Formen denkbar, die mehr als eine Durchführung aufweisen.

Schrumpfschläuche können beispielsweise in der Form eines T-Stücks bei der Firma Hellermann Tyton (www.HellermannTyton.de) bezogen werden. Möchte man solch ein Bauteil als thermoplastisches Gehäuse für ein Durchflussmessgerät verwenden, müssen jedoch selbstverständlich die Dimensionen sowie die Wandstärke des Schrumpfschlauches zweckdienlich angepasst werden.

In einer besonders bevorzugten Ausführung ist das thermoplastische Material von innen mit einer Klebeschicht versehen. Auf diese Weise wird die Haftung zwischen dem Gehäusematerial und den jeweiligen Komponenten des Durchflussmessgeräts verbessert. Die Firma Deifuss-Kabel vertreibt beispielsweise von innen mit Heißkleber beschichte Schrumpfschlauchteile, die ihre Klebeeigenschaften während des Aufschrumpfens entfalten.

Die Herstellung eines Gehäuses für ein magnetisch induktives Durchflussmessgerät gemäß mindestens einer der zuvor genannten Ausführungsformen erfolgt vorzugsweise mittels eines Verfahrens, bei dem das thermoplastische Material zuerst in seinen Dimensionen an diejenigen des Messrohrteilabschnittes und der mindestens einen weiteren Komponente des Durchflussmessgeräts angepasst und entsprechend vorkonfiguriert wird, dass das vorkonfigurierte thermoplastische Material anschließend über den Messrohrteilabschnitt und die mindestens eine weitere Komponente gestülpt wird, und dass es schließlich passgenau aufgeschrumpft wird.

Die Erfindung wird anhand der nachfolgenden Figuren Fig. 1 bis Fig. 3 näher erläutert.
Fig. 1 zeigt einen schematischen Aufbau eines magnetisch induktiven Messgeräts.
Fig. 2 zeigt ein thermoplastisches aufschrumpfbares T-Stück.
Fig. 3 zeigt ein erfindungsgemäßes magnetisch induktives Durchflussmessgerät mit einem Gehäuse aus thermoplastischem Material.

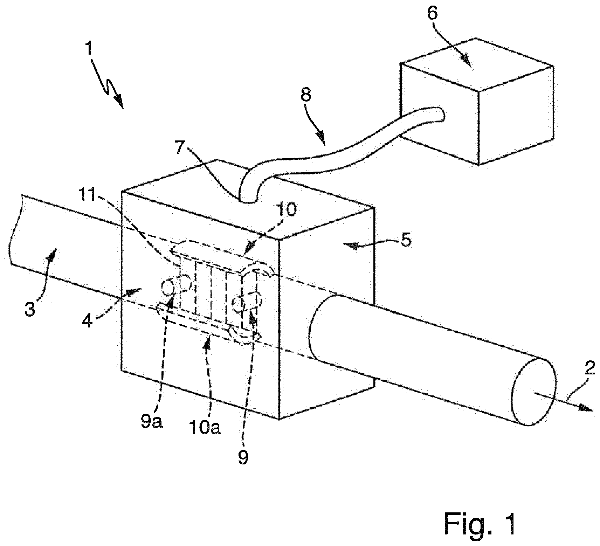

In Fig. 1 ist ein magnetisch induktives Durchflussmessgerät 1 zur Messung des Durchflusses eines strömenden Fluides 2 durch ein Messrohr 3 gezeigt. An einem Messrohrteilabschnitt 4 sind verschiedene Komponenten des Durchflussmessgeräts 1 befestigt. Alle diese Komponenten sowie der Messrohrteilabschnitt 4 sind zweckmäßig von einem Gehäuse 5 umgeben. Außerhalb des Gehäuses 5 befindet sich noch die Elektronikeinheit 6 zur Signalerfassung, -auswertung und/oder-speisung, welche über ein Anschlusskabel 8 mit einem Anschluss 7 am Gehäuse 5 elektrisch verbunden ist. Innerhalb des Gehäuses 5 befinden sich zum einen die Messelektroden 9,9a zum Abgreifen der Spannung, sowie das Magnetsystem, welches hier beispielhaft anhand von zwei Feldspulen 10, 10a gezeigt ist. Die Messelektroden 9, 9a sind dabei jeweils senkrecht zu den Feldspulen 10, 10a positioniert. In dieser Ansicht sind zur Vereinfachung der Abbildung keinerlei Verbindungskabel innerhalb des Gehäuses 5, oder weitere Signalverarbeitungseinheiten gezeigt. Es versteht sich jedoch von selbst, dass solche Komponenten ebenfalls notwendig sind.

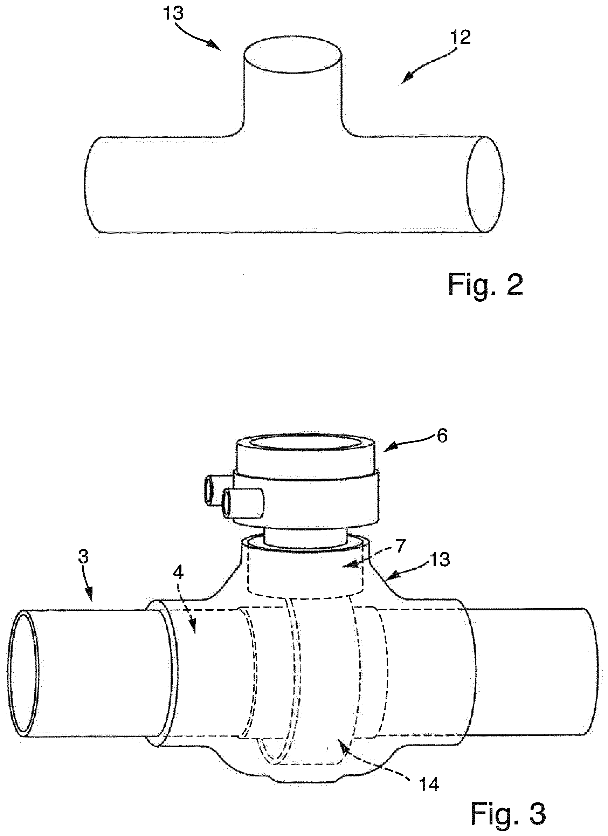

In Fig. 2 ist ein T-Stück aus einem thermoplastischen Material 12 gezeigt, welches erfindungsgemäß als Gehäuse 5 für das Durchflussmessgerät 1 verwendet werden kann. Durch die Ausfertigung als T-Stück ist eine Durchführung 13 für einen Anschluss 7 von Vornherein vorhanden.

In Fig. 3 ist eine Ausgestaltung eines erfindungsgemäßen magnetisch induktiven Durchflussmessgeräts 1 gezeigt mit dem Messrohr 3, dem Messrohrteilabschnitt 4, einem Magnetsystem 14, welches zumindest die beiden Feldspulen 10, 10a aus Fig. 1 beinhaltet, mit einem Anschluss 7, und einer direkt am Anschluss 7 angebrachten Elektronikeinheit 6, so dass das Durchflussmessgerät 1 hier in der bereits erwähnten Kompaktbauweise vorliegt. Der Messrohrteilabschnitt 4 mit den hier nicht sichtbaren Messelektroden, dem Magnetsystem 14 und dem Anschluss 7 sind von einem sich passgenau an die vorgegebenen Konturen anschmiegenden thermoplastischen Gehäuse 5 umgeben. Dieses kann beispielsweise ein Schrumpfschlauch sein, der wie in Fig. 2 skizziert vorkonfiguriert, und dann auf die Komponenten des Durchflussmessgerätes 1 in unmittelbarer Umgebung zum Messrohr 3 aufgeschrumpft ist.

### Bezugszeichenliste

- 1: magnetisch induktives Durchflussmessgerät gemäß Stand der Technik
- 2: strömendes Fluid
- 3: Messrohr
- 4: Messrohrteilabschnitt
- 5: Gehäuseeinheit oder Gehäuse
- 6: Elektronikeinheit
- 7: Anschluss am Gehäuse
- 8: Anschlusskabel
- 9, 9a: Messelektroden
- 10, 10a: Feldspulen des Magnetsystems
- 11: Magnetfeld senkrecht zur Strömungsrichtung des Fluides
- 12: Thermoplastisches aufschrumpfbares T-Stück
- 13: Gehäusedurchführung
- 14: Magnetsystem

## Patentansprüche

1. Vorrichtung zur Messung des Durchflusses eines strömenden Fluides durch ein Messrohr (3) nach dem magnetisch induktiven Messprinzip mit folgenden Komponenten:
- einem Magnetsystem (14) zur Erzeugung eines konstanten Magnetfeldes senkrecht zur Strömungsrichtung des Fluides,
- mindestens zwei mit dem Fluid koppelnden an einem Messrohrteilabschnitt (4) befestigten Messelektroden (9, 9a) zum Abgreifen der induzierten Spannung,
- mindestens einer Elektronikeinheit (6) zur Signalerfassung, -auswertung und/oder -speisung,
- und einem Gehäuse (5)
wobei das Gehäuse (5) den Messrohrteilabschnitt (4) und mindestens eine weitere daran auf der dem Fluid abgewandten Seite befestigte Komponente nach außen gegen die Umgebung begrenzt und schützt, wobei das Gehäuse (5) zumindest teilweise aus einem thermoplastischen Material gefertigt ist, **gekennzeichnet dadurch dass** das Gehäuse den Messrohrteilabschnitt (4) und die mindestens eine weitere daran befestigte Komponente passgenau umhüllt, und
dass das thermoplastische Material über den Messrohrteilabschnitt (4) und die mindestens eine weitere Komponente der Vorrichtung aufgeschrumpft ist.

2. Vorrichtung nach Anspruch 1,
**gekennzeichnet dadurch**
**dass** das Gehäuse mindestens eine Durchführung mit einem Anschluss (7) für mindestens ein Anschlusskabel (8) oder andere Elektronikkomponenten zur Verbindung der sich im Gehäuse (5) befindenden Komponenten mit weiteren Komponenten außerhalb des Gehäuses (5) aufweist, und dass die Durchführung so ausgestaltet ist, dass sie das durchzuführende Anschlusskabel (8) oder die andere Elektronikkomponente vor Beschädigung schützt.

3. Vorrichtung nach einem der vorangegangenen Ansprüche,
**gekennzeichnet dadurch**
**dass** das thermoplastische Material aus einem dickwandigen Schrumpfschlauch besteht.

4. Vorrichtung nach einem der vorangegangenen Ansprüche,
**gekennzeichnet dadurch**
**dass** das Gehäuse (5) aus einem Stück gefertigt ist.

5. Vorrichtung nach einem der vorangegangenen Ansprüche,
**gekennzeichnet dadurch**
**dass** das Gehäuse (5) die Form eines T-Stücks aufweist.

6. Vorrichtung nach einem der vorangegangenen Ansprüche,
**gekennzeichnet dadurch**
**dass** das thermoplastische Material von innen mit einer Klebeschicht versehen ist.

7. Verfahren zur Herstellung einer Vorrichtung zur Messung des Durchflusses eines strömenden Fluides durch ein Messrohr (3) nach dem magnetisch induktiven Messprinzip mit folgenden Komponenten:
- einem Magnetsystem (14) zur Erzeugung eines konstanten Magnetfeldes senkrecht zur Strömungsrichtung des Fluides,
- mindestens zwei mit dem Fluid koppelnden an einem Messrohrteilabschnitt (4) befestigten Messelektroden (9,9a) zum Abgreifen der induzierten Spannung,
- mindestens einer Elektronikeinheit (6) zur Signalerfassung, -auswertung und/oder -speisung,
- und einem Gehäuse (5)
wobei das Gehäuse (5) den Messrohrteifabschnitt (4) und mindestens eine weitere daran auf der dem Fluid abgewandten Seite befestige Komponente nach außen gegen die Umgebung begrenzt und schützt,
**gekennzeichnet dadurch**
**dass** das Gehäuse (5) zumindest teilweise aus einem thermoplastischen Material gefertigt wird,
**dass** der Messrohrteilabschnitt (4) und die mindestens eine weitere daran befestigte Komponente mit dem thermoplastischen Material passgenau umhüllt werden,
**dass** das thermoplastische Material in seinen Dimensionen angepasst an diejenigen des Messrohrteilabschnittes (4) und der mindestens einen weiteren Komponente vorkonfiguriert wird, und
**dass** das vorkonfigurierte thermoplastische Material über den Messrohrteilabschnitt (4) und die mindestens eine weitere Komponente gestülpt wird, und dass es darauf passgenau aufgeschrumpft wird.

## Claims

1. Apparatus for measuring the flow of a fluid flowing through a measuring tube (3) according to the electromagnetic measuring principle, wherein said apparatus comprises the following components:
- a magnetic system (14) designed to generate a constant magnetic field perpendicular to the direction of fluid flow,
- at least two measuring electrodes (9, 9a) coupled to the fluid and fixed to a section of the measuring tube (4), wherein the electrodes are designed to measure the induced voltage,
- at least an electronic unit (6) for signal recording, evaluation and/or supply,
- and a housing (5),
wherein the housing (5) delimits and protects the measuring tube section (4), and at least another component fixed on the section on the side facing away from the fluid, from the environment towards the outside,
wherein the housing (5) is at least partially made from a thermoplastic material,
**characterized in that** the housing surrounds, in a precision-fit manner, the measuring tube section (4) and the at least one other component fixed on said section, and
**in that** the thermoplastic material is shrunk onto the measuring tube section (4) and the at least one other component of the apparatus.

2. Apparatus as claimed in Claim 1,
**characterized in that**
the housing has at least a gland with a connection (7) for at least a connecting cable (8) or other electronic components for connecting the components located in the housing (5) to other components outside the housing (5), and **in that** the gland is designed in such a way that it protects the connecting cable (8) or the other electronic components from damage.

3. Apparatus as claimed in one of the previous claims,
**characterized in that**
the thermoplastic material consists of a thick-walled heat-shrink tube.

4. Apparatus as claimed in one of the previous claims,
**characterized in that**
the housing (5) is made from one piece.

5. Apparatus as claimed in one of the previous claims,
**characterized in that**
the housing (5) is in the shape of a T-piece.

6. Apparatus as claimed in one of the previous claims,
**characterized in that**
the inside of the thermoplastic material is provided with an adhesive layer.

7. Procedure for manufacturing an apparatus designed to measure the flow of a fluid flowing through a measuring tube (3) according to the electromagnetic measuring principle,
wherein said apparatus comprises the following components:
- a magnetic system (14) to generate a constant magnetic field perpendicular to the flow direction of the fluid,
- at least two measuring electrodes (9, 9a) coupled to the fluid and fixed to a measuring tube section (4), said electrodes being designed to measure the induced voltage,
- at least an electronic unit (6) for signal measurement, evaluation and/or supply,
- and a housing (5),
wherein the housing (5) delimits and protects the measuring tube section (4), and at least another component fixed on the section on the side facing away from the fluid, from the environment towards the outside,
**characterized in that**
the housing (5) is at least partially made from a thermoplastic material,
the measuring tube section (4) and the at least one other component secured thereto are surrounded by the thermoplastic material in a precision-fit manner,
the dimensions of the thermoplastic material are adapted to those of the measuring tube section (4) and the at least one other component is preconfigured, and
**in that** the preconfigured thermoplastic material is fitted over the measuring tube section (4) and the at least one other component and **in that** it is shrunk onto this in a precision-fit manner.

## Revendications

1. Dispositif destiné à la mesure du débit d'un fluide s'écoulant à travers un tube de mesure (3) d'après le principe de mesure magnéto-inductif, lequel dispositif comprend les composants suivants :
- un système magnétique (14) destiné à générer un champ magnétique constant perpendiculairement à la direction d'écoulement du fluide,
- au moins deux électrodes de mesure (9, 9a) couplées au fluide et fixées à un tronçon de tube de mesure (4), lesquelles électrodes sont destinées à prélever la tension induite,
- au moins une unité électronique (6) destinée à la mesure, l'exploitation et/ou l'alimentation de signaux,
- et un boîtier (5),
le boîtier (5) délimitant et protégeant le tronçon de tube de mesure (4) et au moins un autre composant qui y est fixé sur le côté opposé au fluide, vers l'extérieur par rapport à l'environnement,
le boîtier (5) étant au moins partiellement constitué d'un matériau thermoplastique,
**caractérisé en ce que** le boîtier entoure de manière parfaitement ajustée le tronçon de tube de mesure (4) et l'au moins un autre composant fixé à celui-ci, et
**en ce que** le matériau thermoplastique est rétracté sur le tronçon de tube de mesure (4) et l'au moins un autre composant du dispositif.

2. Dispositif selon la revendication 1,
**caractérisé**
**en ce que** le boîtier présente au moins une traversée avec un raccordement (7) pour au moins un câble de raccordement (8) ou d'autres composants électroniques pour le raccordement des composants se trouvant dans le boîtier (5) à d'autres composants situés à l'extérieur du boîtier (5), et en ce que la traversée est conçue de telle sorte qu'elle protège le câble de raccordement (8) ou l'autre composant électronique contre les dommages.

3. Dispositif selon l'une des revendications précédentes,
**caractérisé**
**en ce que** le matériau thermoplastique consiste en une gaine thermorétractable à paroi épaisse.

4. Dispositif selon l'une des revendications précédentes,
**caractérisé**
**en ce que** le boîtier (5) est réalisé en une seule pièce.

5. Dispositif selon l'une des revendications précédentes,
**caractérisé**
**en ce que** le boîtier (5) a la forme d'une pièce en T.

6. Dispositif selon l'une des revendications précédentes,
**caractérisé**
**en ce que** le matériau thermoplastique est muni à l'intérieur d'une couche adhésive.

7. Procédé destiné à la fabrication d'un dispositif destiné à la mesure du débit d'un fluide s'écoulant à travers un tube de mesure (3) d'après le principe de mesure magnéto-inductif, lequel dispositif comprend les composants suivants :
- un système magnétique (14) destiné à générer un champ magnétique constant perpendiculairement à la direction d'écoulement du fluide,
- au moins deux électrodes de mesure (9, 9a) couplées au fluide et fixées à un tronçon de tube de mesure (4), lesquelles électrodes sont destinées à prélever la tension induite,
- au moins une unité électronique (6) destinée à la mesure, l'exploitation et/ou l'alimentation de signaux,
- et un boîtier (5),
le boîtier (5) délimitant et protégeant le tronçon de tube de mesure (4) et au moins un autre composant qui y est fixé sur le côté opposé au fluide, vers l'extérieur par rapport à l'environnement,
**caractérisé**
**en ce que** le boîtier (5) est au moins partiellement constitué d'un matériau thermoplastique,
**en ce que** le tronçon de tube de mesure (4) et l'au moins un autre composant qui y est fixé sont entourés de manière parfaitement ajustée par le matériau thermoplastique,
**en ce que** le matériau thermoplastique est préconfiguré dans ses dimensions pour correspondre à celles du tronçon de tube de mesure (4) et de l'au moins un autre composant, et
**en ce que** le matériau thermoplastique préconfiguré est enfilé sur le tronçon de tube de mesure (4) et l'au moins un autre composant et est rétracté sur ceux-ci de manière à s'adapter exactement.
